# EUROPÄISCHE PATENTSCHRIFT

(11) **EP 3 118 604 B1**
(45) Veröffentlichungstag und Bekanntmachung des Hinweises auf die Patenterteilung: **27.03.2019**
(21) Anmeldenummer: 15002081.6
(22) Anmeldetag: 14.07.2015
(51) Int. Cl.: B29C 70/54, B29C 70/30, G01M 5/00

(54) **PRÜFEINRICHTUNG ZUM KONTROLLIEREN EINER BAUTEILHERSTELLUNG**
TESTING DEVICE FOR CONTROLLING COMPONENT PRODUCTION
DISPOSITIF DE VERIFICATION DESTINE A CONTROLER UNE FABRICATION DE COMPOSANT

(43) Veröffentlichungstag der Anmeldung: 18.01.2017
(73) Patentinhaber: Airbus Defence and Space GmbH, 85521 Ottobrunn (DE)
(72) Erfinder: Engel, Franz, 81541 München (DE); Bauer, Daniel, 83568 Durlangen (DE); Orth, Tilman, 85521 Ottobrunn (DE); Weimer, Christian, 85521 Ottobrunn (DE)
(74) Vertreter: LKGLOBAL Lorenz & Kopf PartG mbB Patentanwälte

(56) Entgegenhaltungen:
- EP-A1- 1 574 845
- EP-A1- 2 492 671
- EP-A2- 1 783 501
- US-A1- 2006 108 048
- US-A1- 2007 034 313
- US-A1- 2007 277 919
- US-A1- 2008 169 828
- US-A1- 2008 174 306
- US-A1- 2011 285 402

## Beschreibung

Die vorliegende Erfindung betrifft eine Prüfeinrichtung zur Kontrolle faserverstärkter Bauteile während oder nach deren Herstellung sowie eine Anlage zum automatisierten Herstellen eines faserverstärkten Kunststofflaminats.

Faserverbundkunststoffe werden in vielen Bereichen eingesetzt. Insbesondere finden kohlenstofffaserverstärkte Kunststoffe beispielsweise Verwendung in industriellen Bauteilen, in der Luft- und Raumtechnik und in Sportgeräten.

Die Herstellung der Bauteile kann ein Verbinden mehrerer Einheiten umfassen, beispielsweise durch Verkleben oder Nieten. Diese Naht- und/oder Klebestellen müssen anschließend überprüft werden, was beispielsweise in speziellen Wasserultraschallanlagen erfolgen kann.

Die Herstellung der entsprechenden Bauteile kann insbesondere automatische Schichtlegeprozesse umfassen. Mit Hilfe eines Legekopfes werden dabei trockene oder vorimprägnierte Fasern in schmalen Bändchen nacheinander in mehreren Schichten in einem formgebenden Werkzeug verlegt.

Dabei kann es zu verschiedenen Mängeln kommen. Beispielsweise können bei einem fehlerhaften Legen unerwünschte Überlappungen, Spalte oder Materialfalten auftreten. Daneben kann Fremdmaterial in oder auf die Schichten gelangen; derartiges unerwünschtes Material kann aus der Anlage selbst herrühren (beispielsweise Materialabrieb im Legekopf) oder bei einem offenen Werkzeug als Verschmutzung aus der Umgebung eindringen.

Zur Vermeidung nachteiliger Konsequenzen werden gemäß dem Stand der Technik gelegte Schichten nach jeder abgeschlossenen Lage von Mitarbeitern optisch auf derartige Mängel hin untersucht. Dazu kann das formgebende Werkzeug von den entsprechenden Kontrolleuren betreten werden, zum Teil gibt es auch Hebesysteme, mit denen die Arbeiter über die Form schweben können, um das gelegte Material zu besichtigen.

Derartige Kontrollmechanismen sind aufwendig, beanspruchen viel Zeit und sind oft ungenau. Zudem erfordern insbesondere große Kontrollflächen oft eine systematische Blickführung, die oft schwer einzuhalten ist, so dass Mängel leicht übersehen werden können. Schließlich können das Werkzeug betretende oder über dem Material geführte Personen oder auch die entsprechenden Hebesysteme die verlegten Schichten selbst beschädigen oder verschmutzen.
US 2007/277919 beschreit eine Überwachungseinheit, die mit dem Werkzeug zum Legen der Kopfanordnung verbunden ist. Die Kopfanordnung ist mit einem Roller verbunden, wobei der Roller mit dem Legekopf verglichen werden kann.

US 2008/174306 A1 beschreibt eine Koppelsonde, die ein Magnetfeld in einen Verbundwerksstoff induziert, um Inkonsistenzen bei der Herstellung eines Verbundwerkstoffs festzustellen. Die Koppelsonde ist mit einem Resonanzschwingkreis verbunden. Ein durch die Sonde induziertes Magnetfeld ist mit dem Bauteil verbunden und produziert Wirbelströme in dem Bauteil. Inkonsistenzen in dem Bauteil verändern die Wirbelströme und verändern den Widerstand oder die Resonanzfrequenz des Schwingkreises, die durch ein Gerät auf einem Bildschirm angezeigt werden.
US 2008/169828 A1 beschreibt ebenfalls eine Erkennungseinrichtung von Mängeln, Dabei wird ein elektrisches Feld in das Bauteil durch eine kapazitative Sonde induziert.
EP 1 783 501 A2 beschreibt ein System, um einen Faserverbundwerkstoff auf elektrische Leitfähigkeit zu testen. Dies wird vor dem Hintergrund gemacht, die elektrische Leitfähigkeit des Werkstoffs im Falle eines Blitzschlages in einem Flugzeug sicherzustellen.
US 2011/285402 A1 beschreibt eine Vorrichtung, um eine nicht leitende / isolierende Beschichtung eines Metalls oder Verbundwerkstoffbauteils auf Fehler zu untersuchen. Es werden induktive und kapazitive Messmethoden eingesetzt. Die Messsonde ist im Kontakt mit dem Bauteil.
EP 2 492 671 A1 beschreibt eine Methode mit einer Heiz- und/oder Kühlvorrichtung zur Feststellung von Falten bei der Verarbeitung von Verbundwerkstoffen durch Erhitzung oder Kühlung der zu überprüfenden Stellen. Dabei wird der Verbundwerkstoff entlang einem definierten Weg abgefahren. Die Temperatur wird an einem anderen Punkt gemessen, wo die Erhitzung oder Kühlung auf den Verbundwerkstoff aufgebracht wird. Die Messvorrichtung folgt aber den gleichen Weg wie die Heiz- oder Kühlvorrichtung. Die Falten werden durch Temperaturunterschiede entlang des abgefahrenen Weges festgestellt.

Die vorliegende Erfindung hat daher die Aufgabe, eine Technik bereitzustellen mit der hergestellte Bauteile wie auch automatische Schichtlegeprozesse unter Vermeidung der vorgenannten Nachteile kontrolliert werden können.

Die Aufgabe wird gelöst durch die Prüfeinrichtung gemäß Anspruch 1. Bevorzugte Ausführungsformen sind in den Unteransprüchen offenbart.

Eine erfindungsgemäße Prüfeinrichtung dient einem Kontrollieren einer Herstellung eines faserverstärkten Bauteils. Die Prüfeinrichtung umfasst eine Inspektionsvorrichtung mit einem Sensorsystem. Die Inspektionsvorrichtung ist dazu eingerichtet, sich auf und/oder Uber einer oder mehreren Materialschicht/en und/oder einer Oberfläche des Bauteils zu bewegen und die Materialschicht/en bzw. Oberfläche mit dem Sensorsystem zu untersuchen.

Die Materialschichten können Schichten umfassen, die während der Herstellung des Bauteils aufgetragen werden. Die Oberfläche des Bauteils kann eine oberste Materialschicht des hergestellten Bauteils oder einen Teil derselben umfassen, insbesondere darin Nähte, Nieten und/oder Klebestellen.

Eine erfindungsgemäße Prüfeinrichtung eignet sich insbesondere zur Kontrolle automatisierter Schichtlegeprozesse. Sie ermöglicht dabei eine Überprüfung von Materialschichten des Bauteils während und/oder nach dessen Herstellung, indem verlegte Materialschichten mit Hilfe der Inspektionsvorrichtung abgesucht werden können. Deren Sensorsystem erfasst dabei eine oder mehrere Eigenschaften abgetasteter Materialschichten, wie beispielsweise Licht- und/oder Wärmeabstrahlungen.

Ein visuelles Absuchen der Fläche durch einen Menschen im oder über dem formgebenden Werkzeug kann dadurch entfallen. Insbesondere können dadurch die Kontrolle präzisiert und beschleunigt sowie nachteilige Einwirkungen von Mensch und/oder Hebemechanismus vermieden werden.

Eine erfindungsgemäße Prüfeinrichtung kann zudem auch unter für Menschen nicht verträglichen Bedingungen eingesetzt werden, beispielsweise in einem Autoklaven (bei hohen Temperaturen), in einer Kühlkammer, in einer ungesunden Gasatmosphäre und/oder unter Wasser. Die Prüfeinrichtung kann während eines Verlegens von Materialschichten eingesetzt werden oder nach einem Fertigstellen eines Laminats, z.B. im Rahmen einer Qualitätsüberprüfung.

Gemäß einer bevorzugten Ausführungsform ist die Inspektionsvorrichtung dazu eingerichtet, sich in einem formgebenden Werkzeug losgelöst von einem Legekopf zu bewegen, der in einem automatisierten Schichtlegeprozess Materialschichten verlegt. Die Inspektionsvorrichtung ist dabei vorzugsweise physisch vollständig entkoppelt vom Legekopf, weist also zu diesem keine materielle Verbindung auf. Die Inspektionsvorrichtung kann dabei einen eigenen Antrieb, und/oder eine eigene Steuerung aufweisen. Insbesondere ist die Inspektionsvorrichtung vorzugsweise dazu eingerichtet, ihre Bewegungsrichtung relativ zu einer Bewegungsrichtung des Legekopfes ändern zu können.

Die Prüfeinrichtung kann aus einer einzelnen oder aus mehreren physischen Einheiten bestehen; insbesondere kann die gesamte Prüfeinrichtung selbst dazu eingerichtet sein, sich (mit ihrer Inspektionsvorrichtung) im formgebenden Werkzeug zu bewegen.

Alternativ kann die Prüfeinrichtung außer der Inspektionsvorrichtung eine oder mehrere räumlich trennbare Komponenten umfassen, z.B. eine Steuerungseinheit und/oder ein Anzeige- und/oder Bedienungsgerät, das/die dazu eingerichtet ist/sind, (z.B. ortsfest) außerhalb des formgebenden Werkzeugs eingesetzt zu werden.

Gemäß einer bevorzugten Ausführungsform umfasst eine erfindungsgemäße Prüfeinrichtung mindestens eine Steuerungseinheit. Eine derartige Steuerungseinheit kann insbesondere dazu eingerichtet sein, die Bewegung der Inspektionsvorrichtung und/oder das Sensorsystem (z.B. eine oder mehrere Messungen, die das Sensorsystem vornehmen kann) zu steuern.

Gemäß einer Ausführungsvariante kann die Steuerungseinheit die Bewegung der Inspektionsvorrichtung auf Grundlage von Ergebnissen eines Zufallsgenerators steuern. Vorzugsweise umfasst die Prüfeinrichtung in diesem Fall Sensoren, die dazu eingerichtet sind zu erfassen, wenn die Inspektionsvorrichtung sich in einem vorgegebenen Abstand zu einem Rand des formgebenden Werkzeugs und/oder zu einem anderen Objekt im formgebenden Werkzeug (z.B. zu einem Legekopf wie oben beschrieben, zu einer weiteren Inspektionsvorrichtung und/oder zu einer Reparaturvorrichtung) befindet, und ist die Steuerungseinheit dazu eingerichtet, in diesem Fall in die zufallsgenerierte Bewegung einzugreifen und eine Richtungsänderung der Inspektionsvorrichtung zu bewirken.

Gemäß einer weiteren Ausführungsvariante ist die Steuerungseinheit dazu eingerichtet, die Bewegung der Inspektionsvorrichtung entlang einer kontrollierten Bahn zu steuern. Die Steuerungseinheit kann dabei dazu eingerichtet sein, die Bahn mindestens teilweise während eines von der Prüfeinrichtung durchgeführten Kontrollvorgangs eines Schichtlegeprozesses zu bestimmen und/oder zu korrigieren, beispielsweise automatisch in Abhängigkeit von einer oder mehreren mit dem Sensorsystem erfassten lokalen Eigenschaft/en verlegter Materialschichten. Auf diese Weise kann beispielsweise die Bewegung der Inspektionsvorrichtung bei einem Feststellen einer Auffälligkeit verlangsamt und/oder verdichtet (durch Erhöhung einer Bahnlänge pro Fläche) werden. So kann die Auffälligkeit genauer untersucht und ggf. ein Mangel an der/den Materialschicht/en festgestellt werden, und/oder es kann eine Art und/oder ein Ausmaß des Mangel bestimmt werden.

Eine Steuerungseinheit kann dazu eingerichtet sein, die Steuerung von einem ortsfesten Standpunkt aus vorzunehmen; insbesondere kann die Steuerungseinheit somit von außerhalb des formgebenden Werkzeugs operieren.

Sie kann dabei dazu eingerichtet sein, die Inspektionsvorrichtung (hinsichtlich deren Bewegung und/oder hinsichtlich Aktivitäten des Sensorsystems) automatisch zu steuern. Alternativ oder zusätzlich kann die Steuerungseinheit eine Bedienungsvorrichtung umfassen und dazu eingerichtet sein, die Inspektionsvorrichtung in Abhängigkeit von Benutzereingaben zu steuern. Damit erleichtert diese Ausführungsform die Einflussnahme eines Anwenders.

Alternativ kann eine derartige Steuerungseinheit dazu eingerichtet sein, sich mit der Inspektionsvorrichtung auf und/oder über der einen oder den mehreren Materialschicht/en zu bewegen; die Steuerungseinheit kann somit an die Inspektionsvorrichtung gekoppelt bzw. auf ihr angeordnet sein.

Schließlich kann eine Steuerungseinheit dazu eingerichtet sein, sich losgelöst von der Inspektionsvorrichtung im formbildenden Werkzeug zu bewegen, beispielsweise gekoppelt an eine andere Inspektionsvorrichtung oder an einen Legekopf einer Anlage zur automatisierten Schichtlegung. Dies ist besonders vorteilhaft, wenn die Steuerungseinheit neben Operationen der Inspektionsvorrichtung auch Operationen der anderen Inspektionsvorrichtung bzw. des Legekopfs steuert und dabei die jeweiligen Operationen koordiniert.

Die Inspektionsvorrichtung weist vorzugsweise einen Antrieb (beispielsweise einen Elektromotor) auf, mittels dessen sie sich bewegt. Sie kann zur Fortbewegung Räder, Stelzen, mindestens eine Aufhängung und/oder einen Schwebemechanismus aufweisen. Ein Schwebemechanismus kann beispielsweise eine Aufhängung umfassen, z.B. ein Seil- und/oder Stangensystem. Ein Schwebemechanismus kann ferner eine Vorrichtung zum Erzeugen eines Luftkissens und/oder eine Magnetschwebevorrichtung umfassen. Alternativ oder zusätzlich kann die Inspektionsvorrichtung einen Flugmechanismus wie beispielsweise einen oder mehrere Rotoren aufweisen.

Die Untersuchung der Materialschicht/en durch das Sensorsystem erfolgt vorzugsweise lokal an einer Mehrzahl von Positionen. Die Inspektionsvorrichtung kann dabei dazu eingerichtet sein, mittels des Sensorsystems Bildaufnahmen von verschiedenen Positionen der verlegten Materialschicht/en anzufertigen. Die Bildaufnahmen (z.B. Einzelbildaufnahmen oder kontinuierliche Aufnahmen in Form eines Filmes) können einem Anwender auf einer Anzeigevorrichtung (z.B. einem Bildschirm) zur Auswertung dargestellt werden. Alternativ oder zusätzlich kann die Prüfeinrichtung dazu eingerichtet sein, die Bildaufnahmen automatisch auszuwerten, beispielsweise durch Vergleich mit Musterbildern.

Das Sensorsystem kann einen oder mehrere (gleichartige und/oder verschiedenartige) Sensoren umfassen. Die Untersuchung der Materialschicht/en bzw. der Oberfläche des Bauteils durch das Sensorsystem umfasst vorzugsweise ein Erfassen einer oder mehrerer lokaler Eigenschaften der Materialschicht/en bzw. Oberfläche an einer Mehrzahl von Positionen. Eine derartige Eigenschaft kann dabei eine Oberflächen- und/oder eine Materialbeschaffenheit betreffen.

Gemäß einer bevorzugten Ausführungsform der vorliegenden Erfindung ist das Sensorsystem dazu eingerichtet ist, zum Untersuchen der verlegten Materialschicht/en bzw. Oberfläche eines oder mehrere von Thermographieverfahren, Laserlichtschnittverfahren, Streulichtverfahren, Laserlaufzeitmessung, Bilderkennung, Mustererkennung, Magnetresonanzverfahren, Triangulationsverfahren anzuwenden.

Die Prüfeinrichtung ist vorzugsweise dazu eingerichtet, aus vom Sensorsystem erfassten Eigenschaften der verlegten Materialschicht/en bzw. Oberfläche gegebenenfalls lokale Mängel, also lokale Abweichungen von festgelegten Solleigenschaften zu erkennen; die Erkennung kann durch eine Analyseeinheit erfolgen, die von der Prüfeinrichtung umfasst sein kann und die auf oder an der Inspektionsvorrichtung angeordnet oder von dieser losgelöst sein kann. Die Analyseeinheit kann beispielsweise dazu eingerichtet sein, vom Sensorsystem in Form von Messdaten erfasste Eigenschaften mit Daten einer Datenbank zu vergleichen. Eine Abweichung der Messdaten von den Daten der Datenbank kann dann als Mangel der verlegten Materialschicht/en interpretiert werden.

Gemäß einer vorteilhaften Ausführungsform ist die Prüfeinrichtung dazu eingerichtet, beim Auffinden eines Mangels mindestens ein optisches und/oder akustisches Signal zu erzeugen und/oder den Schichtlegeprozesses anzuhalten. Dies ermöglicht es einem Bediener der Werkzeuganlage, gegebenenfalls einen Herstellungsprozess abzubrechen und neu zu beginnen, oder geeignete Gegenmaßnahmen zu treffen, beispielsweise durch Entfernen eines Schmutzelements oder durch Auffüllen eines Spalts oder Lochs mit einem Füllmaterial.

Alternativ oder zusätzlich kann die Prüfeinrichtung dazu eingerichtet sein, bei einem Auffinden eines Mangels diesen auf der/den verlegten Materialschicht/en zu markieren und/oder Daten einer Position des Mangels zu registrieren, beispielsweise abzuspeichern. Der Mangel kann dann später wiedergefunden und beseitigt werden. Insbesondere erlaubt diese Ausführungsform ein prozessorganisatorisch vorteilhaftes Beseitigen von Mängeln.

Die Inspektionsvorrichtung kann dabei dazu eingerichtet sein, zum Markieren eines aufgefundenen Mangels diesen graphisch zu kennzeichnen, beispielsweise eine Farbmarkierung und/oder eine Haftmarkierung aufzubringen. Alternativ oder zusätzlich kann die Inspektionsvorrichtung dazu eingerichtet sein, den Mangel zu beleuchten oder auf dem Mangel stehenzubleiben und so selbst als Markierungselement zu dienen. Die Prüfeinrichtung kann dann weiterhin eine Bilderfassung auslösen (z.B. eine Fotoaufnahme oder eine rechnergestützte (virtuelle) Bildanreicherung (erweiterte Realität) mit Inspektionsvorrichtung als Markierungspunkt. Auf diese Weise kann die Position des Mangels gespeichert und später (z.B. in einem Reparationsschritt) automatisch oder von einem Anwender wiedergefunden werden; alternativ oder zusätzlich kann die Prüfeinrichtung dazu eingerichtet sein, die Position des Mangels anhand des erfassten Bildes in Koordinaten umzurechnen.

Die Inspektionsvorrichtung kann dazu eingerichtet sein, einen Mangel selbst zu beheben, beispielsweise Korrekturen an verlegten Materialschichten vorzunehmen und/oder unerwünschte Elemente zu entfernen. Dazu kann die Inspektionsvorrichtung einen oder mehrere Aktuator/en aufweisen, beispielsweise mindestens ein Messer, mindestens eine Schere, mindestens einen Magnet, Laser, Sauger, und/oder Greifer und oder mindestens eine Spritzdüse, z.B. für ergänzendes Matrixmaterial.

Diese Ausführungsform kann einen menschlichen Eingriff, insbesondere ein menschliches Eindringen in das formgebende Werkzeug entbehrlich machen. Dadurch kann der Herstellungsvorgang beschleunigt sowie eine Gefahr erneuter Verschmutzung oder Beschädigung vermindert werden.

Schließlich kann die Inspektionsvorrichtung dazu eingerichtet sein, beim Auffinden einer Auffälligkeit oder eines Mangels eine Reparaturvorrichtung und/oder eine andere, sich ebenfalls im formgebenden Werkzeug bewegende oder bereitstehende Inspektionsvorrichtung heranzurufen. Die andere Inspektionsvorrichtung kann dabei ein anderes Sensorsystem aufweisen als die (erste) Inspektionsvorrichtung, beispielsweise ein genaueres oder ein auf einem anderen Prinzip beruhendes. Auf diese Weise können ergänzende Erkenntnisse über die Auffälligkeit bzw. den Mangel gewonnen werden.

Gemäß einer bevorzugten Ausführungsform ist die Prüfeinrichtung dazu eingerichtet zu erfassen, welcher Art ein erkannter Mangel ist, ob lokal z.B. ein Loch und/oder Riss in einer Bahn, ein Spalt zwischen Bahnen, eine Auffaltung einer Bahn und/oder eine Unebenheiten der Oberfläche (z.B. infolge von Luftblasen unter einer Schicht oder infolge von unerwünschten Objekten (z.B. Schmutzelementen)) vorliegt. Alternativ oder zusätzlich kann die Prüfeinrichtung dazu eingerichtet sein zu erfassen, ob lokal z.B. innere Luftblasen vorliegen, und/oder sie kann einen Trocknungsgrad des Materials erfassen.

Die Prüfeinrichtung kann dazu eingerichtet zu erfassen, welches Ausmaß ein erkannter Mangel hat. Sie kann ferner dazu eingerichtet sein, in Abhängigkeit von einer Art und/oder einem Ausmaß eines erkannten Mangels eine Auswahl aus einer Menge bei Auffinden eines Fehlers möglicher Aktionen (wie beispielsweise die oben genannten) zu treffen.

Gemäß einer vorteilhaften Ausführungsform der vorliegenden Erfindung umfasst die Prüfeinrichtung ein Positionssystem zur Positionsbestimmung der Inspektionsvorrichtung im formgebenden Werkzeug. Damit kann vorzugsweise kontinuierlich oder zu bestimmten Zeiten (z.B. in regelmäßigen Abständen) die jeweils aktuelle Position der Inspektionsvorrichtung im formgebenden Werkzeug bestimmt werden.

Das Positionssystem kann eine Einrichtung zum Erzeugen von Signalen (z.B. Schall- oder elektromagnetische Wellen, die moduliert sein können) sowie eine Empfangs- und eine Evaluationseinheit umfassen, die dazu eingerichtet sein kann, anhand eines empfangenen Signals mittels Triangulation eine aktuelle Position der Inspektionsvorrichtung zu bestimmen. Die Einrichtung zum Erzeugen von Signalen und/oder die Empfangseinheit und/oder die Evaluationseinheit können dabei jeweils an oder auf der Inspektionsvorrichtung und/oder an einer von der an oder auf der Inspektionsvorrichtung losgelösten Einheit, beispielsweise am formgebenden Werkzeug oder außerhalb desselben angeordnet sein. Sind die Einrichtung zum Erzeugen von Signalen und die Empfangseinheit beide an bzw. auf der Inspektionsvorrichtung oder beide getrennt von ihr angeordnet, ist die Empfangseinheit vorzugsweise dazu eingerichtet, Reflexionen ausgesandter Signale zu detektieren, beispielsweise am Rand des formgebenden Werkzeugs respektive an der Inspektionsvorrichtung reflektierte Signale.

Alternativ oder zusätzlich kann ein Positionssystem eine Einrichtung zum Erzeugen eines Leitstrahls und/oder eines Lichtmusters und/oder eines magnetischen oder elektromagnetischen Feldes umfassen. Die Inspektionsvorrichtung ist dann vorzugsweise dazu eingerichtet, ihre Position auf Grundlage des Leitstrahls bzw. Lichtmusters bzw. (elektro-)magnetischen Feldes zu bestimmen.

Alternativ oder zusätzlich kann ein Positionssystem einen oder mehrere Bewegungssensor/en an oder auf der Inspektionsvorrichtung umfassen, der/die dazu eingerichtet ist/sind, ein oder mehrere Bewegungsmerkmal/e der Inspektionsvorrichtung (z.B. Richtungswechsel, Geschwindigkeiten) zu erfassen. Ein zusätzlich vom Positionssystem umfasstes Auswertungssystem kann dann anhand der erfassten Bewegungsmerkmale eine Bewegung der Inspektionsvorrichtung verfolgen und damit jeweils aktuelle Positionsdaten bestimmen.

Schließlich kann das Positionssystem eine Vorrichtung zum bildlichen Erfassen des formgebenden Werkzeugs mit der darin befindlichen Inspektionsvorrichtung umfassen, sowie eine Auswertungseinheit, die dazu eingerichtet ist, erfasste Bilder virtuell mit einem Koordinatensystem zu überziehen und daraus automatisch eine aktuelle Position der Inspektionsvorrichtung zu bestimmen.

Gemäß einer vorteilhaften Ausführungsform umfasst die Prüfeinrichtung eine Anzeigevorrichtung (beispielsweise einen Bildschirm), die dazu eingerichtet ist, Ergebnisse der Prüfeinrichtung graphisch darzustellen. Insbesondere kann dabei das formbildende Werkzeug ganz oder in mindestens einem Ausschnitt dargestellt werden, wobei bislang aufgefundene Mängel visualisiert werden können; vorzugsweise ist die Anzeigevorrichtung dazu eingerichtet, bei Auffinden eines Mangels (insbesondere eines weiteren Mangels) jeweils aktualisiert zu werden.

Ein Verwender kann somit einen Überblick über die Qualität eines Herstellungsprozesses bzw. hergestellten Bauteils gewinnen.

Die Anzeigevorrichtung kann zudem mindestens ein Bedienelement aufweisen, mit dem die graphische Darstellung (z.B. hinsichtlich Größe, Ausschnitt und/oder Blickwinkel) beeinflusst werden kann und/oder mit dem mindestens ein Element der Prüfeinrichtung (beispielsweise die Inspektionsvorrichtung) gesteuert werden kann. Die Anzeigevorrichtung ermöglicht somit eine Einflussnahme eines Verwenders auf den Herstellungs- bzw. Kontrollvorgang.

Vorzugsweise weist die Inspektionsvorrichtung Kommunikationsmittel auf, mittels deren die Inspektionsvorrichtung mit anderen Elementen in einer Anlage zum automatisierten Schichtlegen kommunizieren kann, beispielsweise mit einer anderen Inspektionsvorrichtung und/oder mit dem Legekopf und/oder mit einer zusätzlich vorhandenen Reparaturvorrichtung. Damit kann die Inspektionsvorrichtung dazu eingerichtet sein, Kollisionen mit der anderen Inspektionsvorrichtung und/oder mit dem Legekopf zu vermeiden, und/oder die andere Inspektionsvorrichtung bzw. die Reparaturvorrichtung gegebenenfalls heranzurufen, um einen aufgefundenen Mangel oder eine aufgefundene Auffälligkeit zu untersuchen oder zu beheben.

Gemäß einer bevorzugten Ausführungsform umfasst die Prüfeinrichtung mindestens eine erste und eine zweite Inspektionsvorrichtung gemäß einer der in dieser Schrift beschriebenen Ausführungsformen. Die zweite Inspektionsvorrichtung ist dabei vorzugsweise dazu eingerichtet, sich losgelöst von der ersten Inspektionsvorrichtung (und ggf. von einem Legekopf) auf und/oder über einer oder mehreren Materialschicht/en und/oder einer Oberfläche des Bauteils zu bewegen. Die beiden Inspektionsvorrichtungen können von einer gemeinsamen oder von separaten Steuerungseinheit/en gesteuert werden. Sie können einander hierarchisch gleichgeordnet sein, oder die zweite Inspektionsvorrichtung kann der ersten hierarchisch untergeordnet sein. Ein von der zweiten Inspektionsvorrichtung umfasstes Sensorsystem kann mindestens teilweise gleichartige oder verschiedene Sensoren aufweisen wie das Sensorsystem der ersten Inspektionsvorrichtung. Die zweite Inspektionsvorrichtung die gleiche oder eine andere Größe aufweisen wie/als die erste, und/oder sie kann mindestens einen gleichen oder einen anderen Fortbewegungsmechanismus aufweisen wie/als die erste. Die erste und die zweite Inspektionsvorrichtung können dazu eingerichtet sein, sich in jeweils unterschiedlichen Zonen im formgebenden Werkzeug zu bewegen. Die erste und die zweite Inspektionsvorrichtung können für eine Untersuchung der Materialschicht bzw. der Bauteiloberfläche kooperieren, beispielsweise indem die erste Inspektionsvorrichtung Signale, Schall und/oder Temperatur in das Bauteil einträgt, und indem die zweite Inspektionsvorrichtung deren jeweilige Ausbreitung, Übertragung, Dämpfung und/oder Reflexion im Bauteil misst.

Durch die Verwendung mehrerer Inspektionsvorrichtungen kann die Kontrolle des automatisierten Schichtlegeprozesses beschleunigt werden. Darüber hinaus kann die Untersuchung in Bezug auf verschiedene Aspekte erfolgen werden. So können zuverlässig Mängel erkannt werden.

Die vorliegende Erfindung betrifft zudem eine Anlage zum automatisierten Herstellen eines faserverstärkten Kunststofflaminats, die ein formgebendes Werkzeug, einen Legekopf zum automatisierten Verlegen von Materialschichten im formgebenden Werkzeug und eine Prüfeinrichtung gemäß einer der hier beschriebenen Ausführungsformen umfasst.

Im Folgenden wird ein bevorzugtes Ausführungsbeispiel der Erfindung anhand einer Zeichnung näher erläutert. Es versteht sich, dass die schematisch dargestellten einzelnen Elemente und Komponenten auch anders kombiniert und/oder ausgebildet sein können als gezeigt und dass die erfindungsgemäßen Anlage bzw. Prüfeinrichtungen nicht auf die gezeigte Ausführungsvariante beschränkt ist.

Es zeigt schematisch:

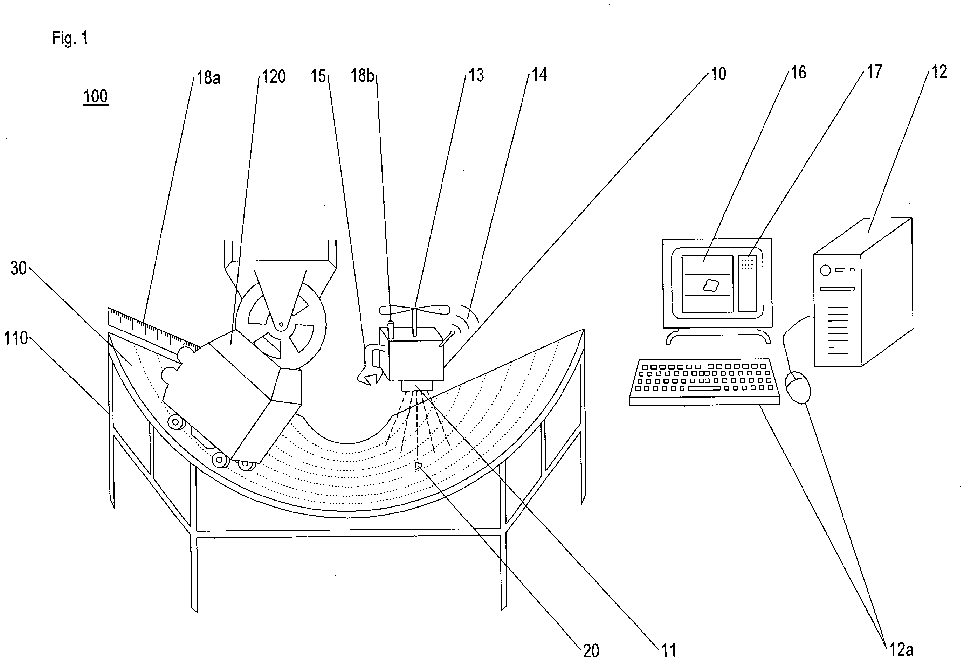

- Figur 1:: eine beispielhafte Anlage zum automatisierten Herstellen eines faserverstärkten Kunststofflaminats mit Prüfeinrichtung gemäß einer Ausführungsform der vorliegenden Erfindung.

In Figur 1 ist eine erfindungsgemäße Anlage 100 zum automatisierten Herstellen eines faserverstärkten Kunststofflaminats mit einer erfindungsgemäßen Prüfeinrichtung dargestellt.

Die Anlage 100 umfasst ein formbildendes Werkzeug 110, in dem ein Legekopf 120 in einem automatisierten Herstellungsprozess Materialschichten 30 in Bändchen verlegt. Auf diese Weise wird ein Bauteil aus faserverstärktem Kunststoff hergestellt.

Die Prüfeinrichtung umfasst eine Inspektionsvorrichtung 10 mit einem Sensorsystem 11. Die Inspektionsvorrichtung 10 bewegt sich über den jeweils verlegten Materialschichten 30, um diese mittels des Sensorsystems 11 abschnittsweise zu untersuchen und so auf Mängel hin zu prüfen. Für die Bewegung weist die Inspektionsvorrichtung im gezeigten Beispiel einen Schwebemechanismus 13 auf, der schematisch als ein Rotor dargestellt ist; alternativ oder zusätzlich könnte der Schwebemechanismus z.B. eine Aufhängung, einen Luftkissenmechanismus und/oder einen Magnetschwebemechanismus aufweisen.

Die Prüfeinrichtung umfasst ferner eine Steuerungseinheit 12, die im vorliegenden Beispiel Operationen der Inspektionsvorrichtung 10 (z.B. deren Bewegung und/oder Operationen des Sensorsystems) extern von außerhalb des formbildenden Werkzeugs 110 steuert. Insbesondere ist die Steuerungseinheit 12 ortsfest. Inspektionsvorrichtung und Steuerungseinheit weisen nicht gezeigte (vorzugsweise drahtlose) Kommunikationsmittel auf, mittels deren sie miteinander kommunizieren können. Wie beschrieben, könnte alternativ die Steuerung an die Inspektionsvorrichtung 10 angehängt oder auf ihr angeordnet sein. Insbesondere könnte die Prüfvorrichtung damit dazu eingerichtet sein, sich als Ganzes über und/oder auf den Materialschichten zu bewegen. Sie könnte dabei als ein autonomer mobiler Roboter ausgebildet sein, der dazu eingerichtet ist, automatisierte Schichtlegeprozesse zu kontrollieren.

Im dargestellten Beispiel umfasst die Steuerungseinheit 12 Bedienelemente 12a, mit denen ein Anwender Einfluss auf die Operationen der Inspektionsvorrichtung 10 nehmen kann; beispielsweise kann er in einem Auswahlmenü 17 angezeigte Operationen auswählen. Alternativ oder zusätzlich kann die Inspektionsvorrichtung 10 automatisch gesteuert sein. Insbesondere kann die Prüfeinrichtung eine eigene künstliche Intelligenz aufweisen und autonom agieren.

Das Sensorsystem 11 ist dazu eingerichtet, die Materialschichten 30 zu untersuchen. Es kann beispielsweise Licht- oder Wärmereflexionen erzeugen und lokal aufgelöst messen, und/oder es kann Bildaufnahmen von Abschnitten der Materialschichten 30 anfertigen.

Im in der Figur gezeigten Beispiel hat die Inspektionsvorrichtung 10 einen Mangel 20 in den Materialschichten 30 aufgefunden und gibt ein Signal 14 ab, um einen Anwender auf das Auffinden hinzuweisen. Das Signal kann beispielsweise ein akustischer Alarm sein, und/oder Bildsignale umfassen, aus denen eine Anzeigevorrichtung 16 eine Bilddarstellung des Mangels 20 in den Materialschichten erzeugt.

Die gezeigte Inspektionsvorrichtung 10 verfügt weiterhin beispielhaft über einen Greifer 15, mit dem sie Fremdkörper auf den Materialschichten entfernen und so einen entsprechenden Mangel beseitigen kann; wie beschrieben kann die Inspektionsvorrichtung alternativ oder zusätzlich einen oder mehrere andere Aktuatoren zum Entfernen eines Mangels aufweisen, wie beispielsweise mindestens ein Messer, mindestens eine Schere, mindestens einen Magnet, Laser, Sauger, und/oder Greifer und oder mindestens eine Spritzdüse für ergänzendes Matrixmaterial.

Die gezeigte Prüfvorrichtung umfasst weiterhin ein Positionssystem 18a, 18b, das in der Figur schematisch als Messraster 18a am formgebenden Werkzeug und als Positionssensor 18b an der Inspektionsvorrichtung dargestellt ist; der Positionssensor 18b ist dabei dazu eingerichtet, die Position der Inspektionsvorrichtung relativ zum Messraster 18a zu erfassen. Insbesondere kann damit bei einem Auffinden eines Mangels 20 auch dessen Position erkannt werden. Auf Grundlage der erfassten Position kann beispielsweise eine Karte der Materialoberfläche mit eingezeichneten Mängeln angefertigt werden, und/oder es kann eine weitere Inspektionsvorrichtung zur genaueren Analyse und/oder Beseitigung des Mangels zum Mangel gesteuert werden; eine Reparaturvorrichtung wird gesteuert um den Mangel zu beseitigen.

### Bezugszeichen

- 10: Inspektionsvorrichtung
- 11: Sensorsystem
- 12: Steuerungseinheit
- 12a: Bedienelement
- 13: Schwebemechanismus
- 14: Signal
- 15: Greifer
- 16: Anzeigevorrichtung
- 17: Auswahlmenü
- 18a, 18b: Positionssystem

- 20: Mangel
- 30: Materialschicht

- 100: Herstellungsanlage
- 110: formbildendes Werkzeug

## Patentansprüche

1. Prüfeinrichtung zur Kontrolle einer Herstellung eines faserverstärkten Bauteils, wobei die Prüfeinrichtung eine Inspektionsvorrichtung (10) mit einem Sensorsystem (11) umfasst, die dazu eingerichtet ist,
sich auf und/oder über einer oder mehreren Materialschicht/en (30) und/oder einer Oberfläche des Bauteils zu bewegen und die Materialschicht/en bzw. Oberfläche mit dem Sensorsystem zu untersuchen, wobei das Sensorsystem mindestens einen oder mehrere optische Sensoren aufweist, um die Materialschicht/en (30) bzw. Oberfläche des Bauteils durch Erfassen lokaler Eigenschaften der Materialschicht/en (30) an einer oder mehrerer Positionen zu untersuchen , und auf Grundlage der Untersuchung durch das Sensorsystem die Materialschicht/en (30) bzw. Oberfläche des Bauteils auf Mängel hin zu untersuchen, und
beim Auffinden eines Mangels
mindestens ein optisches und/oder akustisches Signal (14) zu erzeugen;
einen Prozessschritt in der Herstellung anzuhalten;
den Mangel durch eine Reparatureinrichtung zu beheben;
den Mangel auf der/den Materialschicht/en zu markieren und/oder Daten einer Position des Mangels abzuspeichern;
**dadurch gekennzeichnet, dass** die Inspektionsvorrichtung dazu eingerichtet ist, sich in einem formgebenden Werkzeug (110) losgelöst von einem Legekopf (120) zu bewegen, der in einem automatisierten Schichtlegeprozess Materialschichten verlegt;
wobei die Inspektionsvorrichtung dazu eingerichtet ist, die Bewegungsrichtung der Inspektionsvorrichtung relativ zur Bewegungsrichtung des Legekopfs zu ändern.

2. Prüfeinrichtung gemäß Anspruch 1, die mindestens eine Steuerungseinheit (12) umfasst, die dazu eingerichtet ist, die Bewegung der Inspektionsvorrichtung (10) und/oder Aktivitäten des Sensorsystems (11) zu steuern.

3. Prüfeinrichtung gemäß Anspruch 2, wobei die Steuerungseinheit:
dazu eingerichtet ist, ortsfest angeordnet zu operieren; oder
auf oder an der Inspektionsvorrichtung (10) angeordnet und dazu eingerichtet ist, sich mit der Inspektionsvorrichtung zu bewegen; oder
dazu eingerichtet ist, sich losgelöst von der Inspektionsvorrichtung zu bewegen.

4. Prüfeinrichtung gemäß einem der vorhergehenden Ansprüche, wobei die Inspektionsvorrichtung als Fortbewegungsmechanismus Räder, Stelzen, mindestens eine Aufhängung und/oder mindestens einen Schwebemechanismus (13) aufweist.

5. Prüfeinrichtung gemäß einem der vorhergehenden Ansprüche, wobei das Sensorsystem dazu eingerichtet ist, zum Untersuchen der Materialschicht/en (30) bzw. der Oberfläche eines oder mehrere von:
Thermographieverfahren, Laserlichtschnittverfahren, Streulichtverfahren, Laserlaufzeitmessung, Bilderkennung, Mustererkennung, Magnetresonanzverfahren, Triangulationsverfahren
anzuwenden.

6. Prüfeinrichtung gemäß einem der vorhergehenden Ansprüche, die ein Positionssystem (18a, 18b) zur Positionsbestimmung der Inspektionsvorrichtung (10) auf bzw. über der/den Materialschicht/en (30) umfasst.

7. Prüfeinrichtung gemäß einem der vorhergehenden Ansprüche, die eine Anzeigevorrichtung (16) umfasst und die dazu eingerichtet ist, Ergebnisse der Prüfeinrichtung graphisch darzustellen.

8. Prüfeinrichtung gemäß einem der vorhergehenden Ansprüche, wobei die Inspektionsvorrichtung (10) dazu eingerichtet ist, mit mindestens einer Komponente zur Herstellung des Bauteils und/oder mit einer Reparaturvorrichtung für Materialschichten zu kommunizieren.

9. Prüfeinrichtung gemäß einem der vorhergehenden Ansprüche, wobei die Inspektionsvorrichtung eine erste Inspektionsvorrichtung ist und wobei die Prüfeinrichtung mindestens eine zweite Inspektionsvorrichtung mit einem zweiten Sensorsystem umfasst,
wobei die zweite Inspektionsvorrichtung von einer mit der ersten Inspektionsvorrichtung gemeinsamen Steuerungseinheit oder von einer anderen Steuerungseinheit gesteuert wird als die erste Inspektionsvorrichtung;
wobei das zweite Sensorsystem mindestens einen anderen Sensor aufweist und/oder ein anderes Messverfahren anwendet als das Sensorsystem der ersten Inspektionsvorrichtung;
wobei die zweite Inspektionsvorrichtung einen anderen als oder den gleichen Fortbewegungsmechanismus aufweist wie die erste Inspektionsvorrichtung; und/oder
wobei die erste Inspektionsvorrichtung dazu eingerichtet ist, mit der zweiten Inspektionsvorrichtung zu kommunizieren.

10. Anlage (100) zum automatisierten Herstellen eines faserverstärkten Kunststofflaminats, die ein Werkzeug (110), einen Legekopf (120) zum automatisierten Verlegen von Materialschichten (30) im formgebenden Werkzeug sowie eine Prüfeinrichtung gemäß einem der vorhergehenden Ansprüche umfasst.

## Claims

1. Testing device for controlling production of a fibre-reinforced component, wherein the testing device comprises an inspection device (10) with a sensor system (11), which is designed
to move on and/or over one or more material layer(s) (30) and/or a surface of the component and to examine the material layer(s) or the surface with the sensor system, wherein the sensor system has at least one or more optical sensors in order to examine the material layer(s) (30) or the surface of the component by detecting local characteristic of the material layer (s) (30) at one or more positions, and on the basis of the examination by the sensor system to examine the material layer(s) (30) or the surface of the component for defects, and
when finding a defect
to generate at least one optical and/or acoustic signal (14) ;
to stop a process step in the production;
to rectify the defect by a repair device;
to mark the defect on the material layer(s) and/or
to store data of a position of the defect; **characterized in that**
the inspection device is designed to move in a forming tool (110) independently of a laying head (120) that lays material layers in an automated layer-laying process; wherein the inspection device is designed to change the direction of movement of the inspection device in relation to the direction of movement of the laying head.

2. Testing device according to Claim 1, which comprises at least one control unit (12), which is designed to control the movement of the inspection device (10) and/or activities of the sensor system (11).

3. Testing device according to Claim 2, wherein the control unit:
is designed to operate while arranged fixed in place; or
is arranged on or at the inspection device (10) and is designed to move with the inspection device; or
is designed to move independently of the inspection device.

4. Testing device according to one of the preceding claims, wherein the inspection device has as the transporting mechanism wheels, stilts, at least one suspension and/or at least one hovering mechanism (13).

5. Testing device according to one of the preceding claims, wherein the sensor system is designed to use one or more of the following for examining the material layer(s) (30) or the surface:
a thermography method, laser light sectioning method, stray light method, laser time-of-flight measurement, image recognition, pattern recognition, magnetic resonance method or triangulation method.

6. Testing device according to one of the preceding claims, which comprises a positioning system (18a, 18b) for determining the position of the inspection device (10) on or over the material layer(s) (30).

7. Testing device according to one of the preceding claims, which comprises a display device (16) and is designed to graphically display results of the testing device.

8. Testing device according to one of the preceding claims, wherein the inspection device (10) is designed to communicate with at least one element for producing the component and/or with a repair device for material layers.

9. Testing device according to one of the preceding claims, wherein the inspection device is a first inspection device and wherein the testing device comprises at least one second inspection device with a second sensor system,
wherein the second inspection device is controlled by a control unit shared with the first inspection device or by a different control unit than the first inspection device;
wherein the second sensor system has at least one other sensor and/or applies a different measuring method than the sensor system of the first inspection device;
wherein the second inspection device has a different or the same transporting mechanism than or as the first inspection device; and/or
wherein the first inspection device is designed to communicate with the second inspection device.

10. Installation (100) for automated production of a fibre-reinforced plastic laminate, which comprises a tool (110), a laying head (120) for automatically laying material layers (30) in the forming tool and also a testing device according to one of the preceding claims.

## Revendications

1. Dispositif de test destiné à contrôler la fabrication d'un composant renforcé par des fibres, le dispositif de contrôle comprenant un dispositif d'inspection (10), équipé d'un système de capteurs (11), qui est adapté pour se déplacer sur au moins une couche de matériau (30) et/ou une surface du composant, et/ou au-dessus de celles-ci, et pour analyser l'au moins une couche de matériau ou la surface avec le système de capteurs, le système de capteurs comprenant au moins un capteur optique ou plus pour analyser l'au moins une couche de matériau (30) ou la surface du composant en détectant les propriétés locales de l'au moins une couche de matériau (30) en au moins une position et pour rechercher, sur la base de l'analyse effectuée par le système de capteurs, des défauts dans l'au moins une couche de matériau (30) ou la surface du composant, et lorsqu'un défaut est trouvé
pour générer au moins un signal optique et/ou acoustique (14);
pour arrêter une étape de processus dans la fabrication ;
pour supprimer le défaut par un dispositif de réparation ;
pour marquer le défaut sur l'au moins une couche de matériau et/ou mémoriser des données d'une position du défaut ;
**caractérisé en ce que** le dispositif d'inspection est adapté pour se déplacer dans un outil de formage (110) détaché d'une tête de pose (120) qui pose des couches de matériau dans un processus de pose de couches automatisé ;
le dispositif d'inspection étant adapté pour modifier la direction de déplacement du dispositif d'inspection par rapport à la direction de déplacement de la tête de pose.

2. Dispositif de test selon la revendication 1, comprenant au moins une unité de commande (12) adaptée pour commander le mouvement du dispositif d'inspection (10) et/ou les activités du système de capteurs (11).

3. Dispositif de test selon la revendication 2, l'unité de commande étant adaptée pour fonctionner de manière fixe ; ou
étant disposée sur le dispositif d'inspection (10) au niveau de celui-ci et est adaptée pour se déplacer avec le dispositif d'inspection ; ou
étant adaptée pour se déplacer en étant détachée du dispositif d'inspection.

4. Dispositif de test selon l'une des revendications précédentes, le dispositif d'inspection comportant comme mécanisme d'avancement des roues, des échasses, au moins une suspension et/ou au moins un mécanisme de sustentation (13).

5. Dispositif de test selon l'une des revendications précédentes, le système de capteurs étant adapté pour utiliser, afin d'analyser l'au moins une couche de matériau (30) ou la surface, au moins un des procédés suivants :
procédé de thermographie, procédé de coupe à la lumière laser, procédé à lumière diffuse, mesure du temps de propagation du laser, reconnaissance d'images, reconnaissance de formes, procédé de résonance magnétique, procédé de triangulation.

6. Dispositif de test selon l'une des revendications précédentes, comprenant un système de positionnement (18a, 18b) destiné à déterminer la position du dispositif d'inspection (10) sur l'au moins une couche de matériau (30) ou au-dessus de celle-ci.

7. Dispositif de test selon l'une des revendications précédentes, comprenant un dispositif d'affichage (16) et adapté pour représenter graphiquement des résultats du dispositif de test.

8. Dispositif de test selon l'une des revendications précédentes, le dispositif d'inspection (10) étant adapté pour communiquer avec au moins un composant pour fabriquer le composant et/ou avec un dispositif de réparation de couches de matériau.

9. Dispositif de test selon l'une des revendications précédentes, le dispositif d'inspection étant un premier dispositif d'inspection et le dispositif de test comprenant au moins un deuxième dispositif d'inspection équipé d'un deuxième système de capteurs,
le deuxième dispositif d'inspection étant commandé par une unité de commande commune au premier dispositif d'inspection ou par une unité de commande différente de celle du premier dispositif d'inspection ;
le deuxième système de capteurs comprenant au moins un autre capteur et/ou utilisant un procédé de mesure différent de celui du système de capteurs du premier dispositif d'inspection ;
le deuxième dispositif d'inspection comportant un autre mécanisme d'avancement ou le même mécanisme d'avancement que celui du premier dispositif d'inspection ; et/ou
le premier dispositif d'inspection étant adapté pour communiquer avec le deuxième dispositif d'inspection.

10. Installation (100) destinée à fabriquer de manière automatisée un stratifié de matière synthétique renforcée par des fibres, laquelle installation comporte un outil (110), une tête de pose (120) destinée à poser de manière automatisée des couches de matériau (30) dans l'outil de formage et un dispositif de test selon l'une des revendications précédentes.
